# EUROPÄISCHE PATENTSCHRIFT

(11) **EP 1 236 426 B1**
(45) Veröffentlichungstag und Bekanntmachung des Hinweises auf die Patenterteilung: **22.12.2004**
(21) Anmeldenummer: 02004495.4
(22) Anmeldetag: 27.02.2002
(51) Int. Cl.: A47J 31/08

(54) **Filterpapiereinsatz zur Herstellung von Aromaauszügen aus gemahlenem Kaffee**
Paper filter bag for making coffee
Garniture filtrante en papier pour la préparation de café

(30) Priorität: 03.03.2001 DE 20103730 U
(43) Veröffentlichungstag der Anmeldung: 04.09.2002
(73) Patentinhaber: MELITTA HAUSHALTSPRODUKTE GmbH & Co. Kommanditgesellschaft, D-32427 Minden (DE)
(72) Erfinder: Dölfel, Rainer, Dr., 32457 Porta Westfalica (DE)
(74) Vertreter: Specht, Peter, Dipl.-Phys.

(56) Entgegenhaltungen:
- EP-A- 0 951 854
- WO-A-91/04697
- DE-A- 3 642 898
- DE-A- 19 516 800
- DE-U- 20 105 974

## Beschreibung

Die vorliegende Erfindung betrifft einen Filterpapiereinsatz zur Herstellung von Aromaauszügen aus gemahlenem Kaffee, in Form eines tütenartigen Filters, eines Spitzfilters, eines Pyramidenfilters, eines Basketfilters oder dergleichen, wie aus dem Dokument DE 195 16 800 bekannt.

Filterpapiereinsätze der gattungsgemäßen Art sind in vielerlei Ausführungsformen bekannt und werden zur Herstellung von Aromaauszügen aus gemahlenem Kaffee in ein Filtergefäß eingesetzt, danach wird gemahlener Kaffee eingefüllt und anschließend wird erhitztes Wasser in das Filtergefäß mit dem darin befindlichen Filterpapiereinsatz und dem Kaffeemehl eingelassen, um einen Filterkaffee zu erzeugen.

Bei der Auslegung der Eigenschaften derartiger Filterpapiereinsätze ist man bemüht, diese Eigenschaften so auszulegen, daß unter anderem ein Ansteigen des Brühwasserspiegels über die obere Randkante des Filterpapiereinsatzes selbst (bei tütenartigen Filterpapiereinsätzen oder bei sogenannten Basketfiltem) oder über den oberen Rand des Filtergefäßes (bei der Verwendung von Rundfilterblättern) zu vermeiden.

Die Gefahr des Überlaufens ist bei herkömmlichen Filterpapiereinsätzen unter bestimmten Bedingungen bislang nicht völlig auszuschließen.

Es hat sich gezeigt, daß die Gefahr des Überlaufens insbesondere dann relativ groß ist, wenn entcoffeinierter Kaffee verwendet wird, wenn hochgemahlener, d. h., sehr fein gemahlener Kaffee verwendet wird, wenn unter Verwendung eines relativ kleinen Filters insgesamt eine große Tassenanzahl von Filterkaffee hergestellt werden soll oder wenn weiches Wasser als Brühwasser Verwendung findet.

Das Risiko des Überlaufens erhöht sich, wenn mehrere der vorgenannten Bedingungen zusammentreffen.

Abgesehen von der Gefahr des Überlaufens ergibt sich unter den vorgenannten Bedingungen eine relativ lange Kontaktzeit zwischen dem Brühwasser einerseits und dem Aromaträger (gemahlener Kaffee) andererseits, woraus die Herstellung eines relativ starken Kaffees resultiert.

Der vorliegenden Erfindung liegt die Aufgabe zugrunde, einen Filterpapiereinsatz der gattungsgemäßen Art zu schaffen, bei dem im Vergleich zu bekannten Filterpapiereinsätzen das Überlaufrisiko deutlich verringert wird und der besonders gut geeignet ist zur Erzielung eines milderen Kaffees bzw. einer geringeren Trinkstärke des erzeugten Kaffees.

Diese Aufgabe wird erfindungsgemäß dadurch gelöst, daß die Durchlässigkeit des Filterpapieres, aus dem der Filterpapiereinsatz hergestellt ist, durch Perforation, Prägung bzw. Prägeperforation oder eine Kombination dieser Maßnahmen erhöht ist.

Durch die Erhöhung der Durchlässigkeit des Filterpapieres wird das Risiko des Überlaufens beim Aufbrühen von Kaffee verringert. Die Filtrationszeit des Filterpapiereinsatzes kann durch die erfindungsgemäßen Maßnahmen deutlich verringert werden, ohne daß dabei die Festigkeit des Papieres wesentlich herabgesetzt wird, so daß ein erfindungsgemäßer Filterpapiereinsatz auch im feuchten Zustand samt dem ausgelaugten Kaffeemehl ohne die Gefahr der Zerstörung aus einem Filtergefäß entnommen werden kann.

Ein erfindungsgemäßer Filterpapiereinsatz kann vorteilhafterweise aus einem Filterpapier hergestellt werden, welches eine nach der Herzberg-Methode ermittelte Filtrationszeit < 30 Sekunden aufweist, die durch die Perforation, Prägung oder Prägeperforation insgesamt auf einen Wert von unter 20 Sekunden herabgesetzt ist.

Bei der angesprochenen Herzberg-Methode zur Messung der Filtriergeschwindigkeit und der Naßfestigkeit von Filterpapieren wird ein Filterpapier-Prüfling mit einer Prüffläche von 10 cm² in einen Prüfzylinder eingespannt und dort mit einem unter einem vorbestimmten Druck stehenden Wasser beaufschlagt. Dabei wird ein Prüfdruck zum Prüfen der Filtriergeschwindigkeit von 50 mm Wassersäule eingestellt und die Prüfung bei einer Wassertemperatur von 20° C ± 1° C durchgeführt. Das Wasser muß dabei eine Wasserhärte von 2-10° dH aufweisen.

Das unter den vorstehend genannten äußeren Prüfbedingungen durch das Filterpapier hindurchfließende Wasser fließt über eine Ablaufrinne in einen Meßzylinder mit einer Skalenteilung = ≤ 2 ml. Die Filtrierzeit wird mit einer Stoppuhr gemessen, deren Skalenteilung = ≤ 0,2 Sekunden beträgt.

Aufgrund der vorstehend genannten Prüfbedingungen kann neben der Filtrierzeit, die über eine Stoppuhr ermittelt wird, auch die Filtriergeschwindigkeit ermittelt werden, die sich als Quozient aus der Filtrierzeit und dem im Meßzylinder aufgefangenen Filtriervolumen errechnet.

Der Filterpapiereinsatz kann ganzflächig mit einer Perforation, Prägung, Prägeperforation oder einer Kombination dieser seine Durchlässigkeit vergrößernder Lochungen oder Materialschwächungen versehen sein.

Die Lochungen und/oder Materialschwächungen können bei einem tütenartigen Filterpapiereinsatz in dessen unterem Bereich angeordnet sein.

Es besteht auch die Möglichkeit, die Lochungen und/oder Materialschwächungen bei einem tütenartigen Filterpapiereinsatz in dessen oberem Bereich anzuordnen.

Eine weitere Möglichkeit besteht darin, die Lochungen und/oder Materialschwächungen bei einem tütenartigen Filterpapiereinsatz zonenartig über dessen Gesamtfläche verteilt anzuordnen.

Ausführungsbeispiele der Erfindung sind in den beigefügten Zeichnungen dargestellt und werden im folgenden näher beschrieben.

Es zeigen:
- Figur 1: einen tütenartigen Filterpapiereinsatz gemäß vorliegender Erfindung mit ganzflächig vorgesehenen Lochungen oder Materialschwächungen,
- Figur 2: einen tütenartigen Filterpapiereinsatz mit im unteren Bereich vorgesehenen Lochungen und/oder Materialschwächungen,
- Figur 3: einen tütenartigen Filterpapiereinsatz mit zonenartig angebrachten Lochungen und/oder Materialschwächungen,
- Figur 4: ein Rundfilterblatt mit ganzflächig angebrachten Lochungen und/oder Materialschwächungen.

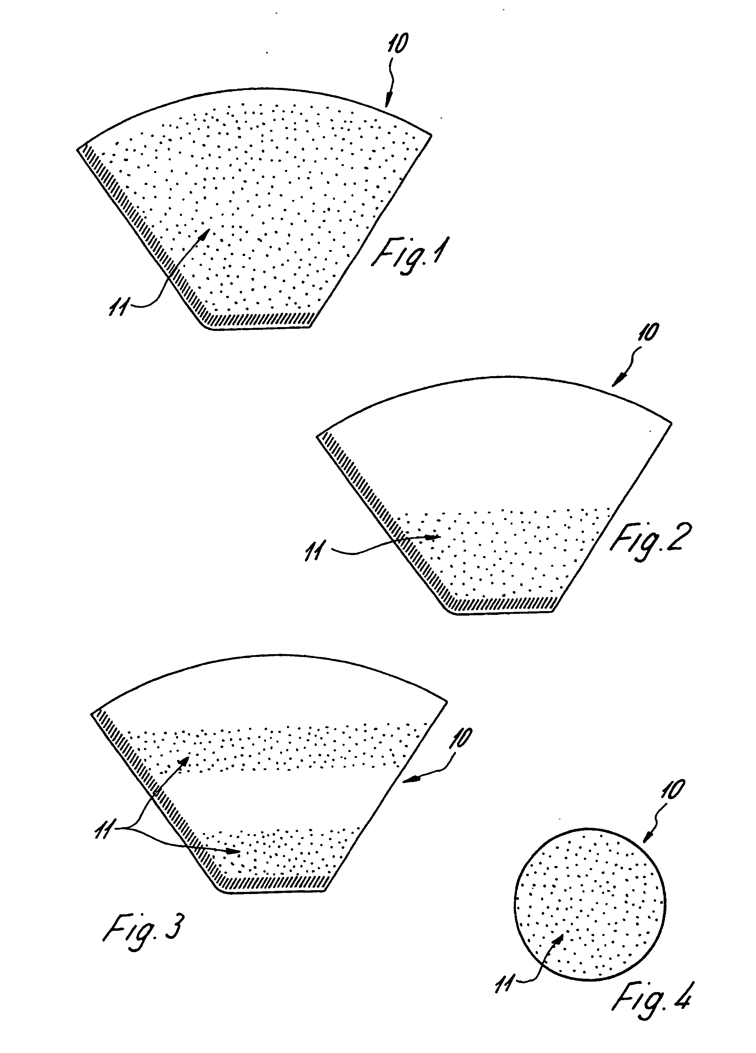

In Figur 1 ist ein erfindungsgemäßer Filterpapiereinsatz 10 dargestellt, der aus einem Filterpapier mit einer nach der Herzberg-Methode ermittelten Filtrationszeit von etwa 30 Sekunden gefertigt ist. Zusätzlich ist das Filterpapier, aus dem der Filterpapiereinsatz 10 gefertigt ist, durch Perforation, Prägung bzw. Prägeperforation 11 oder durch eine Kombination dieser Maßnahmen durchlässiger gemacht, wobei bevorzugt wird, daß die Filtrationszeit nach Anbringung der Perforationen, Prägungen oder Prägeperforationen 11 etwa im Bereich von 15 bis 20 Sekunden, ermittelt nach der Herzberg-Methode, liegt.

Bei Perforationen oder Prägeperforationen wird das verwendete Filterpapier in minimaler Größenordnung gelocht, bei einer reinen Prägung kann das Filterpapier im Prägebereich zur Erhöhung der Durchlässigkeit so weit geschwächt werden, daß der angestrebte Erfolg erzielt wird.

Bei dem in Figur 2 dargestellten Ausführungsbeispiel ist ein ebenfalls tütenartiger Filterpapiereinsatz, der wiederum aus einem Filterpapier mit einer nach der Herzbcrg-Methode ermittelten Filtrationszeit von etwa 30 Sekunden gefertigt ist, lediglich in seinem unteren Bereich mit einer Perforation, Prägung oder Prägeperforation 11 bzw. einer Kombination dieser Maßnahmen ausgestattet ist.

Abweichend hiervon kann eine Perforation, Prägung oder Prägeperforation 11 auch ausschließlich im oberen Bereich des Filterpapiereinsatzes 10 vorgesehen werden.

Wie Figur 3 zeigt, kann ein tütenartiger Filterpapiereinsatz 10, der aus einem Filterpapier mit den oben angegebenen Eigenschaften gefertigt ist, auch mit zonenartig angebrachten Perforationen, Prägungen, Prägeperforationen oder einer Kombination dieser Maßnahmen ausgestattet sein, wobei die Anordnung, Anzahl und geometrische Ausbildung dieser Zonen selbstverständlich von dem dargestellten Ausführungsbeispiel nach Figur 3 abweichen kann.

Schließlich ist in Figur 4 noch ein Filterpapiereinsatz 10 in Form eines Rundfilterblattes dargestellt, welches aus einem Filterpapier mit einer Filtrationszeit nach der Herzberg-Methode von etwa 30 Sekunden besteht. Darüber hinaus ist das Rundfilterblatt ganzflächig mit Perforationen, Prägungen oder Prägeperforationen 11 bzw. einer Kombination dieser Lochungen und/oder Materialschwächungen versehen. Auch hier wird die Durchlässigkeit des Rundfilterblattes durch die Lochungen und/oder Materialschwächungen zusätzlich erhöht.

Bei all diesen Maßnahmen wird die mechanische Belastbarkeit des jeweiligen Filterpapiereinsatzes 10 nicht oder nur unwesentlich herabgesetzt, so daß alle erfindungsgemäßen Filterpapiereinsätze 10 in der Praxis für den Anwender mit keinerlei Nachteilen verbunden sind.

Bei einem durchgeführten Laborversuch wurde aus üblichen Langfasersulfatzellstoffen ein Filterpapier hergestellt, dessen Filtrationszeit, ermittelt nach der Herzberg-Methode, unter 30 Sekunden liegt und welches ein Flächengewicht von 54 g pro qm aufweist. Dieses Filterpapier weist im trockenen Zustand in Längsrichtung eine Bruchkraft von 21 Newton, in Querrichtung eine Bruchkraft von 19 Newton auf und die Bruchkraft in Querrichtung wurde im nassen Zustand mit 3,5 Newton ermittelt.

Dieses Filterpapier wurde mit einer Nadelwalze perforiert, wodurch sich eine Filtrationszeit, ermittelt nach der Herzberg-Methode, von 18 Sekunden ergab. Dabei wurde festgestellt, daß die Werte für die Bruchkraft nur unwesentlich verringert wurden, nämlich in Längsrichtung nunmehr 19,5 Newton, in Querrichtung 15,5 Newton und im nassen Zustand in Querrichtung nunmehr 3,0 Newton.

Trotzdem ergab sich eine deutliche Verringerung der Brühzeit unter verschiedenen Brühbedingungen wie z. B. unterschiedliche Kaffeeesorten, unterschiedliche Mahlgrade und unterschiedliche Mengen des verwendeten Kaffeemehls.

## Patentansprüche

1. Filterpapiereinsatz (10) zur Herstellung von Aromaauszügen aus gemahlenem Kaffee, in Form eines tütenartigen Filters, eines Spitzfilters, eines Pyramidenfilters, eines Basketfilters oder dergleichen, bei dem die Durchlässigkeit des Filterpapieres, aus dem der Filterpapiereinsatz (10) hergestellt ist, durch Perforation, Prägung bzw. Prägeperforation (11) oder eine Kombination dieser Maßnahmen erhöht ist, **gekennzeichnet dadurch, daß** die Filtrationszeit des Filterpapieres, aus dem der Filterpapiereinsatz (10) hergestellt ist, nach der Perforation, Prägung oder Prägeperforation (11) bzw. eine Kombination dieser Maßnahmen insgesamt auf einen Wert von unter 20 Sekunden herabgesetzt ist und ein Filterpapier verwendet ist, dessen nach der Herzberg-Methode ermittelte Filtrationszeit vor einer Perforation, Prägung oder Prägeperforation(11) etwa 30 Sekunden beträgt.

2. Filterpapiereinsatz nach Anspruch 1, **dadurch gekennzeichnet, daß** der Filterpapiereinsatz (10) ganzflächig mit einer Perforation, Prägung, Prägeperforation (11) oder einer Kombination dieser seine Durchlässigkeit vergrößernden Lochungen oder Materialschwächungen versehen ist.

3. Filterpapiereinsatz nach Anspruch 1 oder 2, **dadurch gekennzeichnet, daß** die Lochungen und/oder Materialschwächungen durch die Perforation, Prägung bzw. Prägeperforation (11) bei einen tütenartigen Filterpapiereinsatz (10) in dessen unterem Bereich angeordnet sind.

4. Filterpapiereinsatz nach einem der vorhergehenden Ansprüche, **dadurch gekennzeichnet,** da**ß** die Lochungen und/oder Materialschwächungen durch Perforation, Prägung bzw. Prägeperforation (11) oder eine Kombination dieser Maßnahmen bei einem tütenartigen Filterpapiereinsatz (10) in dessen oberem Bereich angeordnet sind.

5. Filterpapiereinsatz nach einem der vorhergehenden Ansprüche, **dadurch gekennzeichnet, daß** die Lochungen und/oder Materialschwächungen durch Perforation, Prägung bzw. Prägeperforation (11) oder eine Kombination dieser Maßnahmen bei einem tütenartigen Filterpapiereinsatz (1) zonenartig über dessen Gesamtfläche verteilt angeordnet sind.

## Claims

1. Filter paper insert (10) for producing aromatic extracts from ground coffee, in the form of a bag-like filter, a pointed filter, a pyramid filter, a basket filter or the like, in which the permeability of the filter paper from which the filter paper insert (10) is produced is increased by perforation, embossing or embossing perforation (11) or a combination of these measures, **characterized in that** the filtration time of the filter paper from which the filter paper insert (10) is produced is reduced overall to a value of less than 20 seconds following the perforation, embossing or embossing perforation (11) or a combination of these measures, and use is made of a filter paper whose filtration time, determined in accordance with the Herzberg method, is about 30 seconds before perforation, embossing or embossing perforation (11).

2. Filter paper insert according to Claim 1, **characterized in that** the filter paper insert (10) is provided over its entire area with a perforation, embossing, embossing perforation (11) or a combination of these perforations or.material weakenings which increase its permeability.

3. Filter paper insert according to Claim 1 or 2, **characterized in that** the perforations and/or material weakenings by means of the perforation, embossing or embossing perforation (11) in the case of a bag-like filter paper insert (10) are arranged in the lower region of the latter.

4. Filter paper insert according to one of the preceding claims, **characterized in that** the perforations and/or material weakenings by means of perforation, embossing or embossing perforation (11) or a combination of these measures in the case of a bag-like filter paper insert (10) are arranged in the upper region of the latter.

5. Filter paper insert according to one of the preceding claims, **characterized in that** the perforations and/or material weakenings by means of perforation, embossing or embossing perforation (11) or a combination of these measures in the case of a bag-like filter paper insert (10) are arranged to be distributed over the entire area of the latter in the manner of zones.

## Revendications

1. Garniture filtrante en papier (10) destinée à la fabrication d'extraits aromatiques de café moulu, sous forme d'un filtre du type sachet, d'un filtre en pointe, d'un filtre pyramidal, d'un filtre à panier ou similaire, dans laquelle la perméabilité du papier filtrant, dans lequel est fabriquée la garniture filtrante en papier (10), est augmentée par perforation, estampage et/ou perforation par estampage (11) ou une combinaison de ces mesures, **caractérisée en ce que** la durée de filtration du papier filtrant, dans lequel est fabriquée la garniture filtrante en papier (10), est abaissée dans l'ensemble, après la perforation, l'estampage ou la perforation par estampage (11) et/ou une combinaison de ces mesures, à une valeur inférieure à 20 secondes et un papier filtrant est utilisé, dont la durée de filtration déterminée selon la méthode Herzberg est d'environ 30 secondes avant une perforation, un estampage ou une perforation par estampage (11).

2. Garniture filtrante en papier selon la revendication 1, **caractérisée en ce que** la garniture filtrante en papier (10) est dotée sur toute sa surface d'affaiblissement de matériau ou de perçages augmentant sa perméabilité, par perforation, estampage, perforation par estampage (11) ou combinaison de celles-ci.

3. Garniture filtrante en papier selon la revendication 1 ou 2, **caractérisée en ce que** les perçages et/ou les affaiblissements de matériau par la perforation, l'estampage et/ou la perforation par estampage (11) sont disposés, dans le cas d'une garniture filtrante en papier (10) du type sachet, dans la zone inférieure de celle-ci.

4. Garniture filtrante en papier selon l'une des revendications précédentes, **caractérisée en ce que** les perçages et/ou les affaiblissements de matériau par perforation, estampage et/ou perforation par estampage (11) ou une combinaison de ces mesures sont disposés, dans le cas d'une garniture filtrante en papier (10) du type sachet, dans la zone supérieure de celle-ci.

5. Garniture filtrante en papier selon l'une des revendications précédentes, **caractérisée en ce que** les perçages et/ou les affaiblissements de matériau par perforation, estampage et/ou perforation par estampage (11) ou une combinaison de ces mesures sont disposés, dans le cas d'une garniture filtrante en papier (10) du type sachet, en étant répartis par zones sur l'ensemble de la surface de celle-ci.
